(19) **Europäisches Patentamt European Patent Office Office européen des brevets**

(11) **EP 3 413 507 B1**

(12) **EUROPEAN PATENT SPECIFICATION**

(45) Date of publication and mention of the grant of the patent:
**04.05.2022 Bulletin 2022/18**

(21) Application number: **17175206.6**

(22) Date of filing: **09.06.2017**

(51) International Patent Classification (IPC):
*H04L 9/32* (2006.01)        *G06F 21/64* (2013.01)
*G06Q 50/18* (2012.01)

(52) Cooperative Patent Classification (CPC):
**H04L 9/3236; G06F 21/645; H04L 9/3247;**
H04L 2209/38

(54) **ELECTRONIC DOCUMENTS CERTIFICATION**

ZERTIFIZIERUNG ELEKTRONISCHER DOKUMENTE

CERTIFICATION DE DOCUMENTS ÉLECTRONIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.12.2018 Bulletin 2018/50**

(73) Proprietor: **Nokia Technologies Oy 02610 Espoo (FI)**

(72) Inventors:
• **ROENNOW, Troels Cambridge, Cambridgeshire CB2 9BG (GB)**
• **PALYUTINA, Karina Cambridge, CB4 3HA (GB)**
• **MARTÍN LÓPEZ, Enrique Cambridge, CB4 3DN (GB)**

(74) Representative: **Laine IP Oy Porkkalankatu 24 00180 Helsinki (FI)**

(56) References cited:
**EP-A1- 3 160 078        EP-A2- 0 869 637 US-A1- 2007 036 470        US-A1- 2017 048 216**

EP 3 413 507 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

The present invention relates to electronic documents certification and in particular to certifying and verifying authenticity of printed documents.

BACKGROUND

There is a need for certification of electronic documents in many areas, such as legal documents, bank statements, etc. Digital signatures provide an excellent way to verify the authenticity of the sender of a message. However, when the document is printed offline, it is hard to say who printed it. For example, bank statements are frequently required to verify one's address/income. However, one could tamper with the document before printing it.

Digital signatures solutions, such as ones available in office applications may be applied for document authenticity verification. However, these are software solutions that require a Certificate Authority to issue and manage the digital certificates that are required for the digital signatures to be trusted. There is need for improvements for verifying authenticity of printed documents.

US 2017/048216 discloses an apparatus configured to receive a signal representing data including an original document, append a unique identifier to the original document to generate a modified document, generate a hash value of the modified document, and transmit the hash value corresponding to the modified document to an electronic distributed ledger.

SUMMARY

The invention is defined by the features of the independent claims. Some specific embodiments are defined in the dependent claims.

According to a first aspect of the present invention, there is provided apparatus comprising at least one processing core, at least one memory including computer program code, the at least one memory and the computer program code being configured to, with the at least one processing core, cause the apparatus at least to: generate a certification identifier for a document, generate a hash of at least a portion of the document, add a signature and the certification identifier to the document, generate a signed transaction comprising the certification identifier, the hash of the document and settings for reproducing hash of the document, the transaction being signed by a cryptographic key associated to the apparatus, provide the signed transaction to a distributed ledger.

According to a second aspect of the present invention, there is provided a method, comprising: receiving, by a certifying device, a document for printing and digital certification, generating a certification identifier for the document, generating a hash of at least a portion of the document, adding a signature and the certification identifier to the document, generating a signed transaction comprising the certification identifier, the hash of the document and settings for reproducing hash of the document, the transaction being signed by a cryptographic key associated to the apparatus, and providing the signed transaction to a distributed ledger.

According to a third aspect, there is provided an apparatus, comprising at least one processing core, at least one memory including computer program code, the at least one memory and the computer program code being configured to, with the at least one processing core, cause the apparatus at least to: detect a certification identifier of a printed document comprising a computer-generated signature for authenticity verification, search for a distributed ledger record associated with the certification identifier, and verify authenticity of the digital signature of the document on the basis of a distributed ledger record associated with the certification identifier, the distributed ledger record comprising a hash of at least portion of the document and settings for reproducing hash on the basis of at least portion of the document.

According to a fourth aspect, there is provided a method, comprising: detecting a certification identifier of a printed document comprising a computer-generated signature for authenticity verification, searching for a distributed ledger record associated with the certification identifier, and verifying authenticity of the digital signature on the basis of a distributed ledger record associated with the certification identifier, the distributed ledger record comprising a hash of at least portion of the document and settings for reproducing hash on the basis of at least portion of the document.

According to an embodiment, printing of the document comprising the signature and the certification identifier is initiated. According to an embodiment, the signature is generated by a secret key associated to the apparatus and on the basis of one or more of at least a portion of the document, certification identifier, and metadata of the document.

According to an embodiment, the hash is generated on the basis of document data from a scanner, and scanning settings applied for scanning the document are included in the transaction.

According to an embodiment, the distributed ledger record comprises metadata and the digital signature is verified on the basis of the metadata.

BRIEF DESCRIPTION OF THE DRAWINGS

FIGURE 1 illustrates an example system capable of supporting at least some embodiments of the present invention;

FIGURES 2 and 3 illustrate methods in accordance with at least some embodiments of the present invention;

FIGURE 4 illustrates a blockchain transaction record;

FIGURE 5 illustrates hashing of a document in accordance with at least some embodiments of the present invention; and

FIGURE 6 illustrates an apparatus in accordance with at least some embodiments of the present invention.

EMBODIMENTS

There is now provided a method and apparatus enabling certification of printed documents by applying a distributed ledger. An example of such distributed ledger is a blockchain ledger. A specific trusted hardware or device may be applied for certifying authenticity of printed documents. Such document-certifying device may be referred to as a distributed ledger notary or blockchain notary, for example. The certifying device participates in the distributed ledger and updates the distributed ledger by a transaction comprising verification information that can be used for later verifying the authenticity of the printed document. The purpose of the ledger here is to keep track of the certified printed documents. The certifying device is itself certified on the ledger, by a decentralized ID, such as a public encryption key associated with the device. The transaction is digitally signed by the certifying device, by a secret key associated with the certifying device. This enables hardware security for the verification.

The certifying device causes addition of a signature to the printed document. The signature is associated with a specific certification identifier, which is also included in the transaction and stored in the distributed ledger. The verification information is accessible by other devices capable of accessing the distributed ledger. A verifying device, which may be any device capable of checking authenticity of a printed certified document, may verify the authenticity of the printed document on the basis of the information in the printed document and associated verification information in the ledger.

With already existing blockchain-based document storage systems enabling later retrieval and verification, it may be possible that a person pretending to be another person signs a document and the system could not appropriately verify authenticity. However, the presently disclosed features enable the receiver of the printed document to have certainty that a certified party or device has signed it. The present application of distributed ledger-based or blockchain-based physically-printed signature enables a recipient of the document to verify that the document was indeed printed with a sender's certifying device on the basis of the certification identifier and associated certification information in the distributed ledger. The present features hence enable to prove that the printed signature is related to the physical document. For instance, the presently disclosed use of the certifying device facilitates avoiding attempts to prepare false documents by taking a signature from one document and signing another document with the signature. The present solution further enables to manage digital signatures in a decentralized way and no single point of failure, in contrast with conventional, centralized Certificate Authorities.

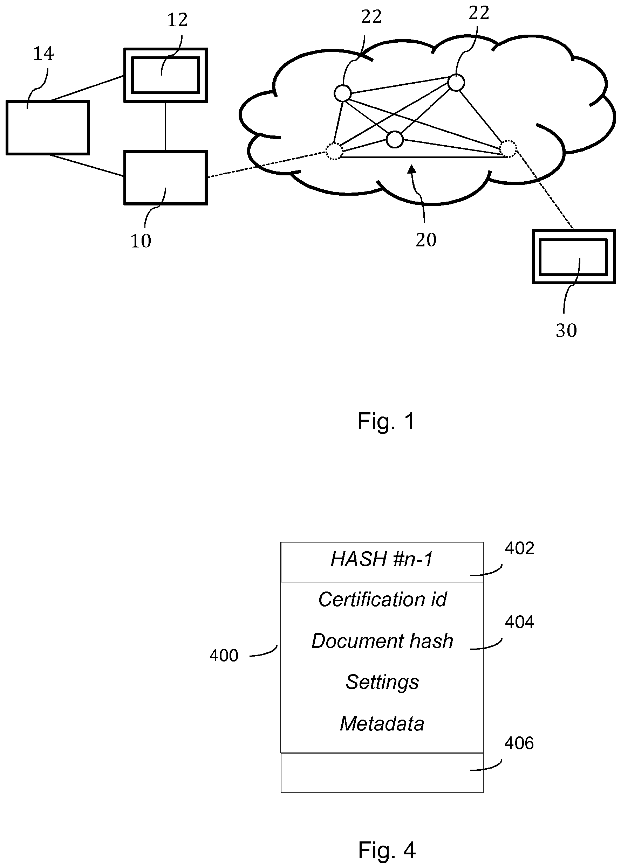

FIGURE 1 illustrates an example blockchain-based system in accordance with at least some embodiments of the present invention. A certifying device or blockchain notary device 10, capable of certifying printed documents according to at least some of the present embodiments, is connected to a computer 12 and a printer 14.

FIGURE 1 illustrates that the certifying device 10 and a verifying device 30 may belong to a blockchain 20 comprising blockchain nodes 22, operate as blockchain nodes, and store local blockchain (BC) database. The device 10, 30 may host a full blockchain node, making the device a part of the blockchain network.

The devices 10, 12, 30 may comprise corporate, authority, and/or user devices, such as a server, a desktop/tablet/laptop computer, smartphone, set-top box or other suitable electronic device. The system may comprise an administrator or management node, a hub, relay or other kind of intermediate device (not shown) for connecting a blockchain node to further networks or services, such as another distributed or centralized computing system or a cloud service. The nodes are mutually addressable in a suitable way, for example, they may be connected to an internet protocol, IP, network. Messages released into the IP network with a recipient address are routed by the network to the recipient node identified by the recipient address. IP is not the only suitable networking technology used, for example, other peer-to-peer networking models are also suitable.

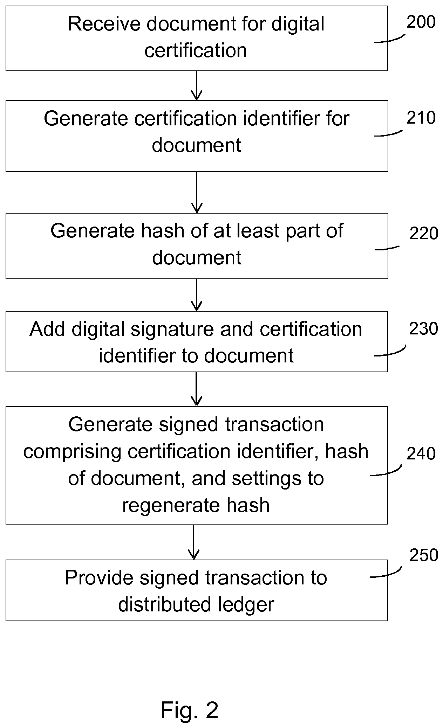

FIGURE 2 illustrates a method according to some embodiments. The method may be implemented in a document-certifying apparatus, such as the device 10.

A document is received 200 for digital certification. The document may be already printed or in electronic form. A certification identifier is generated 210 for the document. The certification identifier may also be referred to as a document identifier, and can be any type of identifier that can associate a printed document to verification information in a distributed ledger.

A hash of at least a portion of the document is generated 220. The document (portion) being hashed may or may not comprise the certification identifier. The term 'hash' and the generation of the hash of the at least portion of the document is to be understood broadly to refer to a unique code representing the document and to a method for concisely uniquely identifying or representing the document. The hash may be generated on the basis of a portion or the whole information carrying out the document, such as a page. The hash generation may involve first preparing a representation of the document, whereby the document information contents may be reduced or otherwise processed according to predefined settings. A hash code may then be generated of such representation of the document, as the unique essence that can be cryptographically signed. For example, the representation could be a diagonal across the page, a scan, a photograph or some other kind of representation on the basis of the document. In an embodiment, the hash may be a specific encoding of documents contents. For example, the number of times each letter or number occurs. The hash may be a generated on the basis of combination of two or more methods, set to capture an essence of the document concisely.

A signature and the certification identifier is added 230 to the document. It is to be noted that adding the signature and the certification identifier is to be understood broadly to refer to including the certification identifier and the digital signature for the document, at the same time or at different points of time. The signature may be retrieved from memory or generated for the document by a cryptography key, such as a secret key associated to the verifying apparatus, on the basis of at least a portion of the document. The secret key may be a device-specific secret key, or in some embodiments a private cryptography key of an authorized user provided to the apparatus, for example.

A digitally signed transaction is generated 240, the transaction being signed by the secret key associated to the apparatus. The transaction comprises the certification identifier, the hash of the document and settings for reproducing hash of the document. The signed transaction is provided 250 to a distributed ledger.

The document comprising the digital signature and the certification identifier may be printed after block 250. This results to the printed document comprising verification information, which may also comprise the verification identifier in non-encrypted form, facilitating finding of associated verification information in the distributed ledger. However, in some embodiments, the printing of the document refers to printing only a part of the information forming the document contents. In an embodiment, verification information, such as the signature and associated verification identifier, is thus printed to the printed document, and the adding 230 and printing may be in fact carried out in a single step. In some embodiments, printing of the document is enabled only after detecting confirmation of the transaction being added to the distributed ledger, for example after successful addition to a blockchain ledger.

Assuming that the settings for reproducing the hash enable to produce an equivalent hash whenever the document is printed, it is not necessary to physically print the document in connection with the certification illustrated in Figure 2. The document can be generated, recorded and certified on the ledger and distributed digitally. Then a receiving party can print and forward the printed document (as long as it is printed according to settings and the signature can be verified).

It is important to note that at least some of the blocks of Figure 2 may be carried out in different order. For example, the certification identifier may be generated only after generation of the hash 220 or after generation or addition 230 of the digital signature. In another example, signature and/or certification identifier are added only after generation 240 of the transaction or provision 250 of the transaction to the distributed ledger.

Each certifying device 10 is provided with a public-private key pair at manufacture, and an account corresponding to this key pair may be created on the distributed ledger. The private key resides on the certifying device's secured element, such that it cannot be tampered with and the private key cannot be stolen. Moreover, the secure element also holds the hashing and signing logic, such that the document signed always corresponds to the hash. This way an attacker cannot alter the hash of a signed document by feeding a different document through the hashing function. In some embodiments, the distributed ledger is private or permissioned, and the certifying device needs to be connected both to the computer 12 and the printer 14 to have access to the private or permissioned ledger. Because devices are added to the private network at manufacture and their private keys are kept secret, unauthorized devices cannot sign documents.

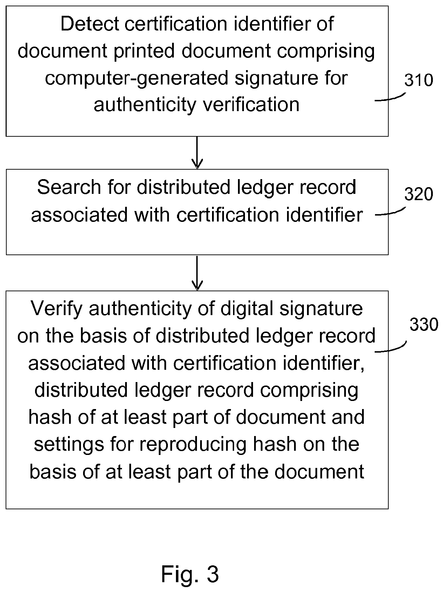

FIGURE 3 illustrates a method according to some embodiments. The method may be implemented in an apparatus for verifying authenticity of a printed document, such as the device 30, for example.

A certification identifier in a printed document comprising a computer-generated signature is detected 310. The certification identifier may be detected based on OCR or other technique or based on user input, for example. A distributed ledger is searched for 320 a record including an identifier matching with the certification identifier. If the device implementing the method of Figure 3 hosts a blockchain, it may search from its local copy of the distributed ledger. Alternatively, it may in block 320 request one or more devices to search for the matching record.

If a matching record is found, authenticity of the digital signature is verified 330 on the basis of the distributed ledger record associated with the certification identifier. The distributed ledger record comprises at least a hash of at least portion of the document and settings for reproducing hash on the basis of at least portion of the document.

In some embodiments, the features illustrated in Figures 2 and 3 are applied in a blockchain-based system. Thus, the distributed ledger is a blockchain ledger, storing blockchain transactions of certified documents. Some further example embodiments of such blockchain-based certification and verification of printed documents are provided below.

Blockchain state information shared by the nodes 10, 22, 30 may store all the transactions and history carried out in the network 20, also regarding the certification information of printed documents. The blockchain state information is stored in or as the blockchain ledger. Each node may comprise the ledger whose content is in sync with other ledgers. The nodes may validate and commit transactions in order to reach consensus. Each node may have their own copy of the ledger which is in some embodiments permission-controlled, so participants see only appropriate transactions.

Changes in resource ownership in the blockchain 20 take the form of blockchain transactions secured by strong cryptography. A blockchain transaction may comprise an identifier of a new owner, that is the recipient, of the resource, together with a cryptographic signature of the previous owner, that is the sender, such that malicious attackers cannot re-assign resources they do not own. Application of blockchain technology and the ledger enable a way to track the unique history of transactions by the individual nodes in the network and here verify authenticity of printed documents.

The certifying device 10 may provide 260 signed blockchain transactions to the blockchain ledger whenever it generates a document ID. To establish a next block, the transactions are broadcast into the blockchain network. Broadcasting here refers to a dissemination method suitable for the context, which will cause the transactions to be communicated to the nodes of the network in general. Reaching each and every node with each and every transaction is not strictly necessary.

A node establishing the next block may be known as a miner node. A miner node may compile a set of transactions, which it receives from the broadcasts, for the next block, and search for a proof-of-work code that covers all the transactions in the set of transactions for the next block. For example, the proof-of-work code may be a numerical value, with which the contents of the next block, that is, the set of transactions, hashes to a value that is less than a threshold. More generally, there may be a target area of an output space of a hash function, wherein the target space need not be in the low end of the target space. The smaller the target area is, the more difficult it is to discover the proof-of-work. Once a miner discovers the proof-of-work, it can publish the block, which other nodes of the system will then add to the block chain as the new most recent established block.

In case the miner node discovers a proof-or-work based on an incomplete set of transactions, for example if some transactions did not reach the miner node, other nodes in the network will not accept the block into the blockchain, and it will be excluded from a consensus version of the blockchain in the system.

Since an output of a hash function is a pseudorandom function of the input, the set of transactions, hashed by itself, produces a hash value that is essentially randomly placed in the output space of the hash function. The set of transactions may be completely or representatively present as input to the hash function. Modifying the input with a candidate proof-of-work code, which may be known as a nonce, will produce a new hash value, which again is essentially randomly placed in the output space of the hash function. The modification may be as slight as a single bit. Therefore, searching for the correct proof-of-work code, which satisfies a pre-agreed criterion concerning its location in the output space of the hash function, requires repeatedly deriving a hash value with a different candidate proof-of-work code modifying the input to the hash function. Once a proof-of-work code that, with the transactions, produces a hash value in the target area of the output space of the hash function is found, the block is ready. A completed block may be distributed to the system to establish it in the blockchain. Although discussed above in terms of proof-of-work, in some embodiments a proof-of-stake may be used instead of, or additionally to, a proof-of-work. In a proof-of-stake based system, a new block is accepted once a sufficient fraction of resources are proven as owned by nodes ready to accept the new block version.

Once a new block is established, the blockchain becomes longer. A transaction is considered the more reliable, the larger the number of blocks established since the block where the transaction is comprised. This is since transactions are hashed into the chain of blocks, and discrepancies in the block chain are resolved as the block chain gets longer. In each next block in the sequence, a hash of the previous block may be included along with the transactions, attaching the blocks to each other to form the chain. Hashes linking the blocks together to form a chain may be referred to as Merkle hashes. Maliciously modifying a transaction in a block far down the chain would involve re-doing the work of finding proofs for all subsequent blocks, since the input to the hash function for the block comprising the transaction would be changed, causing the resulting hash value, with the proof in that block, to no longer be disposed in the desired area in the output space of the hash function.

The blockchain ledger should allow read-only access of the document verification information and identifiers for anyone who may be a recipient of a signed document. The recipient, such as the device 30, can then look up 320 for transactions involving their document ID on the ledger to verify the authenticity of the signature.

FIGURE 4 illustrates a simplified example of a blockchain transaction record *n* 400 that may be generated by the certifying device 10. The transaction may be a public transaction comprising the certification information for the printed document provided to the blockchain 20 and stored in the ledger.

The record comprises certification information 404 for the printed document and a hash pointer 402 to previous block *n-1* of the chain. The certification information 404 may comprise the certification identifier, the document hash and the settings to reproduce the document hash based on the printed document.

In some embodiments, the certifying device 10 includes in block 240 metadata of the document in the transaction. Thus, the certification information 404 further comprises metadata associated with the document. For example, the metadata comprises at least one of location or resource identifier of an electronic copy of the document, date and time of printing, title, word count, document identifier, document type, classification, and/or author. The metadata may be added to the document before the hash generation, the signature generation and the printing. Some or all of the metadata, such as the header, may be encrypted.

The record may comprise also further information element(s) 406, such as timestamp. However, it is to be appreciated that the above is just one example of how the printed document may be associated 202 to distributed ledger record and the verifying device.

In some embodiments, the certifying device 10 includes metadata of the document to the document before generating the hash 220 or the signature 230.

The certifying device 10 may thus sign a uniquely identified portion of the document. A secret or private key of the device may be used for generating the signature, whereby the receiver of the document, the verifying device 30, may thus use the public key of the certifying device 10 to verify the signature and thus that the certifying device 10 indeed created the signature. It is to be noted that the sender and the author or certifying device of the document do not have to be the same party. In the case a genuine and signed document is forwarded, one can still verify it was signed by the author, if the author is a known public key on the ledger. Hence the signature is intimately linked to the document, such that such a signature cannot be attached to another document if the other document is not equivalent to the original document.

In some embodiments, the signature for the document is generated by digitally signing with the secret key of the certifying device 10 one or more of at least a portion of the document, the certification identifier, and metadata of the document.

In an embodiment, a random and unique certification identifier is appended to document header. Document metadata may also be included in the header of the file. Some or all the information included in the header is then signed with the private key of the certifying device 10, and this signature is appended 230 to the document.

Hash generation 220, for at least a portion of the printed document prevents the same certification identifier from being attached to a different document by an attacker. The settings for reproducing hash of the document may comprise one or more of contrast parameter information, information of the hashed portion of the document, information of the hashing method, or another input parameter or setting affecting hash generation.

The hash may be generated 220 on the basis of non-printed document in electronic form before printing to paper, therefore not requiring a scanner. This can be achieved by hashing the total plain text of the document (or part of it if the selected part is indicated). Alternatively, the graphical description of the text in a Page Description Language (PDL) format can be hashed.

In other embodiments, the hash is generated 220 on the basis of document data from a scanner, i.e. based on paper copy of the document. The printer 14 may operate also (or instead) as a scanner and may be controlled to scan the document for at least certification purpose. Thus, the certifying device 10 is configured to include scanning settings applied for scanning the document and received from the scanner in the transaction.

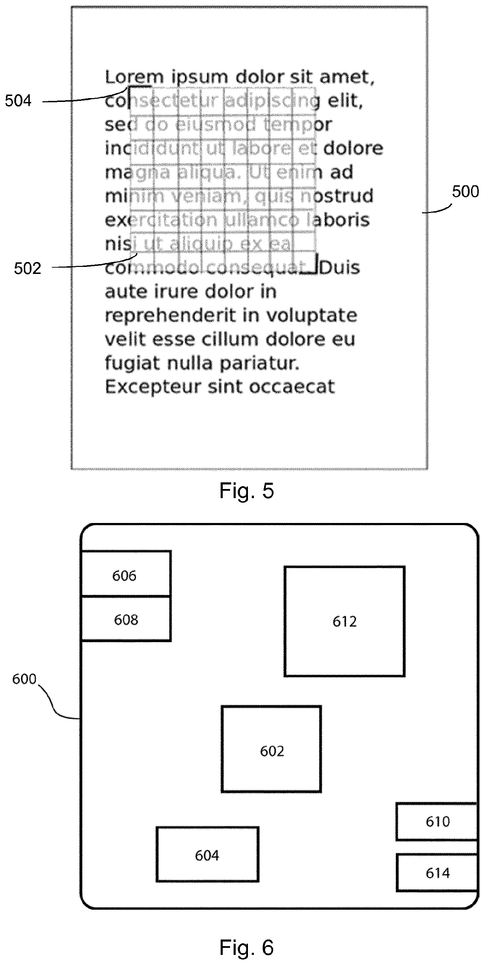

FIGURE 5 illustrates hashing of a document 500 according to an embodiment. Scanning from the paper copy is non-trivial, as the hash needs to be invariant under scanning. According an embodiment, the following method may be applied for this purpose: When the certifying device 10 receives the document 500 from the computer 12, it firsts adjusts contrast by changing mean and variance of the pixel values to predefined targets. Then it selects a rectangular area 502 in the document 500 and marks its corners with special markers 504. The resulting area is made into an m x n grid. Then, a hash of the selected area in the manner of a Z-order curve or space-filling curve is computed: for each square in the grid, compute whether black or white is a prevalent colour. If black is prevalent, pick, map square to '1', otherwise, '0'.

For instance, such operation may be represented as:

$$\mathrm{hash}[i] = \mathrm{square}[i].\mathrm{isMoreBlack}() \ ? \ 1 : 0$$

To make the hashing scanner-invariant, the contrast setting is recorded on the ledger together with the certification identifier and the hash. The target mean and variance of the pixel values may be recorded on the distributed ledger.

To verify the hash, the verifying device 30 needs to scan the document 500, look up its ID on the ledger, adjust the contrast settings of the document and compute the hash with the same algorithm.

In some embodiments, the certifying device 10 may implement one or more methods for hashing and chooses the appropriate method depending on the document being printed. For example, if plain text is printed, the device may be configured to select a standard SHA256 algorithm. If an image is to be printed, the device may select the above-illustrated method. In this case the certifying device 10 further includes information on the used hashing method in the distributed ledger. The verifying device 30 then accordingly adjusts the hash generation on the basis of the hashing method information in the ledger.

In an embodiment, the certifying device 10 uses a predefined classifier that turns an image into bit sequence. Examples of such classifiers include an OCR algorithm or a binary feature extractor. Similarly as above, the certifying device 10 may add markers to the document and introduce a coordinate system. It now, randomly selects N places on the document and performs a classification. The resulting bit vectors may be concatenated and may or may not be hashed. The positions and the classification algorithms are recorded on the ledger. In order to reconstruct the original hash, it may be necessary to adjust contrast, alignment etc. as in the previous section.

In an example procedure, when a document needs to be signed, a sign-print command may be received from a user. The document is routed to the certifying device 10 first. The certifying device adjusts contrast, computes hash, and generates a random and unique verification ID. The ID is appended to document header and a new ledger transaction is broadcast to the blockchain network. The transaction includes at least the generated verification ID, the hash of the document, and the settings required to reproduce the hash, such as contrast setting. The transaction can also include document meta-data. Alternatively, document metadata can be included in the header of the file, e.g. after the unique file ID. All the information included in the header may then be signed with the private key of the certifying device, and this signature is appended to the document. When the ledger transaction is mined, the certifying device sends the document (with the newly appended header) to the actual printer and the document is printed.

There are a number of options available for implementing the authenticity verification 330, providing different degrees of certainty available one can obtain with the verification protocol. A simple verification involves looking up the document ID on the ledger. If metadata associated with the document is recorded on the distributed ledger, the verifying device 30 can have some confidence that the signature is authentic. To obtain further confidence, the verifying device 30 needs to scan the document, adjust the settings, compute the hash and compare it to the value stored in the distributed ledger.

If printed documents are linked to an electronic copy of the document, the certifying device 10 may record location of the electronic copy on the network/database in the distributed ledger. In this scenario, the verifying device 30 does not need to compute hash, but simply look up the electronic copy and compare it with the printed copy for authenticity verification 330.

In some embodiments, the certifying device 10 is implemented as part of a printer apparatus, or acts as a standalone device as an intermediate device between a computer 12 providing a document for printing and a printer 14. In the first option, the printer apparatus may include storage and be configured to operate as a node of the blockchain 20.

The interface between the certifying device 10 and the computer may be a printer interface and the certifying device 10 may configured to function or appear as a printer towards the computer 12. The certifying device 10 appearing as a printer may thus be accessible by standard printer drivers from the legacy operating systems by the computer 12. The user of the computer 12 may simply choose to print a document to the printer, causing also automatic blockchain-based verification for the printed document by the certifying device 10. Since the device 10 can cause the document to be accessible via the blockchain, the device may thus operate and be referred to as a blockchain printer or a blockchain document printer. This enables simple interface for users to print later-verifiable documents with highly advanced properties i.e. regarding auditability.

The certifying device 10 may be owned by an organization, such as bank or health care authority, and access-controlled. An example is a bank sending a physical bank statement to a customer, which may be used to prove address and income, for example. If the bank is certified on the blockchain, the customer's landlord, or a lettings agent, for example, could scan the statement and lookup the certification identifier to make sure it was issued by the bank.

FIGURE 6 illustrates an example apparatus capable of supporting at least some embodiments of the present invention. Illustrated is a device 600, which may comprise a communications device arranged to operate as a node in a blockchain-based storage. The device may be arranged to carry out at least some of the embodiments related to generating verification information for a printed document by applying a distributed ledger and/or verifying authenticity of a printed document by verification information in a distributed ledger as illustrated above. The device may include one or more controllers configured to carry out operations in accordance with at least some of the embodiments illustrated above, such as some or more of the method steps illustrated in connection with Figures 1 to 5. The device may operate as the certifying device 10 and/or the verifying device 30.

Comprised in the device 600 is a processor 602, which may comprise, for example, a single- or multi-core processor wherein a single-core processor comprises one processing core and a multi-core processor comprises more than one processing core. The processor 602 may comprise more than one processor. The processor may comprise at least one application-specific integrated circuit, ASIC. The processor may comprise at least one field-programmable gate array, FPGA. The processor may be means for performing method steps in the device. The processor may be configured, at least in part by computer instructions, to perform actions.

The device 600 may comprise memory 604. The memory may comprise random-access memory and/or permanent memory. The memory may comprise at least one RAM chip. The memory may comprise solid-state, magnetic, optical and/or holographic memory, for example. The memory may be at least in part accessible to the processor 602. The memory may be at least in part comprised in the processor 602. The memory 604 may be means for storing information. The memory may comprise computer instructions that the processor is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The memory may be at least in part comprised in the processor. The memory may be at least in part external to the device 600 but accessible to the device. For example, control parameters affecting operations related to certifying or verifying printed documents and actions associated with the distributed ledger may be stored in one or more portions of the memory and used to control operation of the apparatus. Further, the memory may comprise device-specific cryptographic information, such as secret and public key of the device 600.

The device 600 may comprise a transmitter 606. The device may comprise a receiver 608. The transmitter and the receiver may be configured to transmit and receive, respectively, information in accordance with at least one wired or wireless, cellular or non-cellular standard. The transmitter may comprise more than one transmitter. The receiver may comprise more than one receiver. The transmitter and/or receiver may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example. The device 600 may comprise a near-field communication, NFC, transceiver 610. The NFC transceiver may support at least one NFC technology, such as NFC, Bluetooth, Wibree or similar technologies.

The device 600 may comprise user interface, UI, 612. The UI may comprise at least one of a display, a keyboard, a touchscreen, a vibrator arranged to signal to a user by causing the device to vibrate, a speaker and a microphone. A user may be able to operate the device via the UI, for example to accept incoming telephone calls, to originate telephone calls or video calls, to browse the Internet, to manage digital files stored in the memory 604 or on a cloud accessible via the transmitter 606 and the receiver 608, or via the NFC transceiver 610, and/or to play games.

The device 600 may comprise or be arranged to accept a user identity module or other type of memory module 614. The user identity module may comprise, for example, a subscriber identity module, SIM, and/or a personal identification IC card installable in the device 600. The user identity module 614 may comprise information identifying a subscription of a user of device 600. The user identity module 614 may comprise cryptographic information usable to verify the identity of a user of device 600 and/or to facilitate encryption and decryption of documents and communication effected via the device 600, such as the private and/or public keys as illustrated above.

The processor 602 may be furnished with a transmitter arranged to output information from the processor, via electrical leads internal to the device 600, to other devices comprised in the device. Such a transmitter may comprise a serial bus transmitter arranged to, for example, output information via at least one electrical lead to memory 604 for storage therein. Alternatively to a serial bus, the transmitter may comprise a parallel bus transmitter. Likewise the processor may comprise a receiver arranged to receive information in the processor, via electrical leads internal to the device 600, from other devices comprised in the device 600. Such a receiver may comprise a serial bus receiver arranged to, for example, receive information via at least one electrical lead from the receiver 608 for processing in the processor. Alternatively to a serial bus, the receiver may comprise a parallel bus receiver.

The device 600 may comprise further devices not illustrated in Figure 6. For example, the device may comprise at least one digital camera. Some devices may comprise a back-facing camera and a front-facing camera. The device may comprise a fingerprint sensor arranged to authenticate, at least in part, a user of the device. In some embodiments, the device lacks at least one device described above. For example, some devices may lack the NFC transceiver 610 and/or the user identity module 614.

The processor 602, the memory 604, the transmitter 606, the receiver 608, the NFC transceiver 610, the UI 612 and/or the user identity module 614 may be interconnected by electrical leads internal to the device 600 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

It is to be understood that the embodiments of the invention within the scope as defined in the claims are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. The skilled person will appreciate that above-illustrated embodiments may be combined in various ways. Embodiments illustrated in connection with Figures 2 to 5 may be taken in isolation or further combined together.

Various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in communications.

ACRONYMS LIST

| | |
|---|---|
| ASIC | Application-specific integrated circuit |
| FPGA | Field-programmable gate array |
| GSM | Global system for mobile communication |
| IC | Integrated Circuit |
| LTE | Long term evolution |
| NFC | Near-field communication |
| OCR | Optical character recognition |
| PoS | Proof-of-stake |
| PoW | Proof-of-work |
| UI | User interface |
| WCDMA | Wideband code division multiple access, |
| WiMAX | Worldwide interoperability for microwave access |
| WLAN | Wireless local area network |

**Claims**

1. An apparatus (600) comprising at least one processing core, at least one memory (604) including computer program code, the at least one memory and the computer program code being configured to, with the at least one processing core, cause the apparatus at least to:

   - receiving (200) a document for printing and digital certification;
   - generate (210) a certification identifier for the document,
   - generate (220) a hash of at least a portion of the document, **characterized by** further being caused to
   - add (230) a signature and the certification identifier to the document after generating (220) the hash,
   - generate (240) a signed transaction comprising the certification identifier, the hash of the document and settings for reproducing hash of the document, the transaction being signed by a cryptographic key associated to the apparatus, and
   - provide (250) the signed transaction to a distributed ledger for verifying authenticity of a signature of a printed document comprising the certification identifier, and
   - causing initiating printing of the document comprising the certification identifier and the signature.

2. The apparatus of claim 1, wherein the apparatus is caused to generate the signature by a secret key associated to the apparatus and on the basis of one or more of the at least a portion of the document, the certification identifier, and metadata of the document.

**3.** The apparatus of any preceding claim, wherein the apparatus is caused to add metadata of the document to the document before the hash generation, the signature addition and printing, and the apparatus is caused to store metadata of the document in the transaction.

**4.** The apparatus of any preceding claim, wherein the apparatus is caused to generate the hash on the basis of non-printed document in electronic form.

**5.** The apparatus of any preceding claim 1 to 3, wherein the apparatus is caused to generate the hash on the basis of document data from a scanner, and the apparatus is caused to include scanning settings applied for scanning the document in the transaction.

**6.** The apparatus of any preceding claim, wherein the apparatus is configured to operate as a blockchain notary device.

**7.** An apparatus (600) comprising at least one processing core, at least one memory (604) including computer program code, the at least one memory and the computer program code being configured to, with the at least one processing core, **characterized by** causing the apparatus at least to:

- detect (310) a certification identifier of a printed document comprising a computer-generated signature for authenticity verification,
- search (320) for a distributed ledger record associated with the certification identifier, and
- verify (330) authenticity of the digital signature of the document on the basis of a distributed ledger record associated with the certification identifier, the distributed ledger record comprising a hash of at least portion of the document and settings for reproducing hash on the basis of at least portion of the document, wherein the apparatus is caused to control scanning of the printed document on the basis of the settings in the distributed ledger record associated with the certification identifier, calculate hash value of the scanned document, and verify the digital signature of the document on the basis of comparison of the calculated hash value and the hash value in the distributed ledger record.

**8.** The apparatus of claim 7, wherein the distributed ledger record comprises metadata and the apparatus is caused to verify the digital signature on the basis of the metadata.

**9.** The apparatus of claim 7, wherein the apparatus is caused to calculate the hash on the basis of a portion of the scanned document on the basis of information of the hashed portion of the document in the distributed ledger record.

**10.** The apparatus of any preceding claim, wherein the settings for reproducing hash of the document comprise at least one of contrast parameter information, information of the hashed portion of the document, and information of the hashing method.

**11.** A method, comprising:

- receiving (200), by a certifying device, a document for digital certification,
- generating (210) a certification identifier for the document,
- generating (220) a hash of at least a portion of the document, **characterized by**
- adding (230) a signature and the certification identifier to the document after generating (220) the hash,
- generating (240) a signed transaction comprising the certification identifier, the hash of the document and settings for reproducing hash of the document, the transaction being signed by a cryptographic key associated to the apparatus, and
- providing (250) the signed transaction to a distributed ledger for verifying authenticity of a signature of a printed document comprising the certification identifier, and
- causing initiating printing of the document comprising the certification identifier and the signature.

**12.** A method for authenticity verification, **characterized by** comprising:

- detecting (330) a certification identifier of a printed document comprising a computer-generated signature for authenticity verification,
- searching (320) for a distributed ledger record associated with the certification identifier, and
- verifying (330) authenticity of the digital signature on the basis of a distributed ledger record associated with the certification identifier, the distributed ledger record comprising a hash of at least portion of the document and settings for reproducing hash on the basis of at least portion of the document, wherein scanning of the printed document is controlled on the basis of the settings in the distributed ledger record associated with the certification identifier, hash value of the scanned document is calculated, and the digital signature of the document is verified on the basis of comparison of the calculated hash value and the hash value in the distributed ledger record.

**13.** A computer program configured to, when executed in a computer, cause a method in accordance with claim 11 or 12 to be performed.

**Patentansprüche**

1. Einrichtung (600), die mindestens einen Verarbeitungskern, mindestens einen Speicher (604), der einen Computerprogrammcode beinhaltet, umfasst, wobei der mindestens eine Speicher und der Computerprogrammcode dazu ausgelegt sind, die Einrichtung mit dem mindestens einen Verarbeitungskern mindestens zu Folgendem zu veranlassen:

   - Empfangen (200) eines Dokuments zum Drucken und zur digitalen Zertifizierung;
   - Erzeugen (210) einer Zertifizierungskennung für das Dokument,
   - Erzeugen (220) eines Hash von mindestens einem Abschnitt des Dokuments, **dadurch gekennzeichnet, dass** sie ferner zu Folgendem veranlasst wird
   - Hinzufügen (230) einer Signatur und der Zertifizierungskennung zum Dokument nach Erzeugen (220) des Hash,
   - Erzeugen (240) einer signierten Transaktion, die die Zertifizierungskennung, den Hash des Dokuments und Einstellungen zum Reproduzieren des Hash des Dokuments umfasst, wobei die Transaktion durch einen kryptographischen Schlüssel, der mit der Einrichtung verknüpft ist, signiert wird, und
   - Bereitstellen (250) der signierten Transaktion für ein verteiltes Hauptbuch zum Verifizieren der Authentizität einer Signatur eines gedruckten Dokuments, das die Zertifizierungskennung umfasst, und
   - Veranlassen des Initiierens des Druckens des Dokuments, das die Zertifizierungskennung und die Signatur umfasst.

2. Einrichtung nach Anspruch 1, wobei die Einrichtung veranlasst wird, die Signatur durch einen geheimen Schlüssel, der mit der Einrichtung verknüpft ist, und auf Basis von einem oder mehrerem des mindestens einen Abschnitts des Dokuments, der Zertifizierungskennung und von Metadaten des Dokuments zu erzeugen.

3. Einrichtung nach einem der vorhergehenden Ansprüche, wobei die Einrichtung veranlasst wird, Metadaten des Dokuments vor dem Erzeugen des Hash, dem Hinzufügen der Signatur und dem Drucken zum Dokument hinzuzufügen, und die Einrichtung veranlasst wird, Metadaten des Dokuments in der Transaktion zu speichern.

4. Einrichtung nach einem der vorhergehenden Ansprüche, wobei die Einrichtung veranlasst wird, den Hash auf Basis eines nicht gedruckten Dokuments in elektronischer Form zu erzeugen.

5. Einrichtung nach einem der vorhergehenden Ansprüche 1 bis 3, wobei die Einrichtung veranlasst wird, den Hash auf Basis von Dokumentdaten von einem Scanner zu erzeugen, und die Einrichtung veranlasst wird, Scaneinstellungen, die zum Scannen des Dokuments angewendet werden, in die Transaktion einzubinden.

6. Einrichtung nach einem der vorhergehenden Ansprüche, wobei die Einrichtung dazu ausgelegt ist, als eine Blockkettenbeglaubigungsvorrichtung betrieben zu werden.

7. Einrichtung (600), die mindestens einen Verarbeitungskern, mindestens einen Speicher (604), der einen Computerprogrammcode beinhaltet, umfasst, wobei der mindestens eine Speicher und der Computerprogrammcode dazu ausgelegt sind, mit dem mindestens einen Verarbeitungskern **gekennzeichnet durch** Veranlassen der Einrichtung mindestens zu Folgendem:

   - Detektieren (310) einer Zertifizierungskennung eines gedruckten Dokuments, das eine von einem Computer erzeugte Signatur umfasst, zur Authentizitätsverifizierung,
   - Suchen (320) nach einem verteilten Hauptbuchdatensatz, der mit der Zertifizierungskennung verknüpft ist, und
   - Verifizieren (330) der Authentizität der digitalen Signatur des Dokuments auf Basis eines verteilten Hauptbuchdatensatzes, der mit der Zertifizierungskennung verknüpft ist, wobei der verteilte Hauptbuchdatensatz einen Hash von mindestens einem Abschnitt des Dokuments und Einstellungen zum Reproduzieren des Hash auf Basis des mindestens einen Abschnitts des Dokuments umfasst, wobei die Einrichtung veranlasst wird, das Scannen des gedruckten Dokuments auf Basis der Einstellungen im verteilten Hauptbuchdatensatz, der mit der Zertifizierungskennung verknüpft ist, zu steuern, einen Hashwert des gescannten Dokuments zu berechnen und die digitale Signatur des Dokuments auf Basis des Vergleichs des berechneten Hashwerts und des Hashwerts des verteilten Hauptbuchdatensatzes zu verifizieren.

8. Einrichtung nach Anspruch 7, wobei der Hauptbuchdatensatz Metadaten umfasst und die Einrichtung veranlasst wird, die digitale Signatur auf Basis der Metadaten zu verifizieren.

9. Einrichtung nach Anspruch 7, wobei die Einrichtung veranlasst wird, den Hash auf Basis eines Abschnitts des gescannten Dokuments auf Basis von Informationen des gehashten Abschnitts des Dokuments im verteilten Hauptbuchdatensatz zu berechnen.

10. Einrichtung nach einem der vorhergehenden Ansprüche, wobei die Einstellungen zum Reproduzieren des Hash des Dokuments mindestens eines von Kontrastparameterinformationen, Informationen des gehashten Abschnitts des Dokuments und Informationen des Hashingverfahrens umfassen.

11. Verfahren, das Folgendes umfasst:

- Empfangen (200) eines Dokuments zur digitalen Zertifizierung durch eine Zertifizierungsvorrichtung,
- Erzeugen (210) einer Zertifizierungskennung für das Dokument,
- Erzeugen (220) eines Hash von mindestens einem Abschnitt des Dokuments, **gekennzeichnet durch**
- Hinzufügen (230) einer Signatur und der Zertifizierungskennung zum Dokument nach Erzeugen (220) des Hash,
- Erzeugen (240) einer signierten Transaktion, die die Zertifizierungskennung, den Hash des Dokuments und Einstellungen zum Reproduzieren des Hash des Dokuments umfasst, wobei die Transaktion durch einen kryptographischen Schlüssel, der mit der Einrichtung verknüpft ist, signiert wird, und
- Bereitstellen (250) der signierten Transaktion für ein verteiltes Hauptbuch zum Verifizieren der Authentizität einer Signatur eines gedruckten Dokuments, das die Zertifizierungskennung umfasst, und
- Veranlassen des Initiierens des Druckens des Dokuments, das die Zertifizierungskennung und die Signatur umfasst.

12. Verfahren zur Authentizitätsverifizierung, **dadurch gekennzeichnet, dass** es Folgendes umfasst:

- Detektieren (330) einer Zertifizierungskennung eines gedruckten Dokuments, das eine von einem Computer erzeugte Signatur umfasst, zur Authentizitätsverifizierung,
- Suchen (320) nach einem verteilten Hauptbuchdatensatz, der mit der Zertifizierungskennung verknüpft ist, und
- Verifizieren (330) der Authentizität der digitalen Signatur auf Basis eines verteilten Hauptbuchdatensatzes, der mit der Zertifizierungskennung verknüpft ist, wobei der verteilte Hauptbuchdatensatz einen Hash von mindestens einem Abschnitt des Dokuments und Einstellungen zum Reproduzieren des Hash auf Basis des mindestens einen Abschnitts des Dokuments umfasst, wobei das Scannen des gedruckten Dokuments auf Basis der Einstellungen im verteilten Hauptbuchdatensatz, der mit der Zertifizierungskennung verknüpft ist, gesteuert wird, ein Hashwert des gescannten Dokuments berechnet wird und die digitale Signatur des Dokuments auf Basis des Vergleichs des berechneten Hashwerts und des Hashwerts des verteilten Hauptbuchdatensatzes verifiziert wird.

13. Computerprogramm, das, wenn es in einem Computer ausgeführt wird, dazu ausgelegt ist, die Durchführung eines Verfahrens gemäß Anspruch 11 oder 12 zu veranlassen.

**Revendications**

1. Appareil (600) comprenant au moins un noyau de traitement, au moins une mémoire (604) comportant un code de programme informatique, l'au moins une mémoire et le code de programme informatique étant configurés pour, avec l'au moins un noyau de traitement, amener l'appareil à au moins :

- recevoir (200) un document pour une impression et une certification numérique ;
- générer (210) un identifiant de certification pour le document,
- générer (220) un hachage d'au moins une partie du document, **caractérisé en ce qu'**il est en outre amené à
- ajouter (230) une signature et l'identifiant de certification au document après la génération (220) du hachage,
- générer (240) une transaction signée comprenant l'identifiant de certification, le hachage du document et des réglages pour reproduire un hachage du document, la transaction étant signée par une clé cryptographique associée à l'appareil, et
- fournir (250) la transaction signée à un grand livre distribué pour vérifier l'authenticité d'une signature d'un document imprimé comprenant l'identifiant de certification, et
- provoquer l'initiation d'une impression du document comprenant l'identifiant de certification et la signature.

2. Appareil selon la revendication 1, dans lequel l'appareil est amené à générer la signature par une clé secrète associée à l'appareil et sur la base d'un ou plusieurs parmi l'au moins une partie du document, l'identifiant de certification et des métadonnées du document.

3. Appareil de l'une quelconque des revendications précédentes, dans lequel l'appareil est amené à ajouter des métadonnées du document au document avant la génération de hachage, l'addition et l'impression de signature, et

l'appareil est amené à stocker des métadonnées du document dans la transaction.

4. Appareil de l'une quelconque des revendications précédentes, dans lequel l'appareil est amené à générer le hachage sur la base d'un document non imprimé sous forme électronique.

5. Appareil de l'une quelconque des revendications précédentes 1 à 3, dans lequel l'appareil est amené à générer le hachage sur la base de données de document provenant d'un dispositif de balayage, et l'appareil est amené à inclure des réglages de balayage appliqués pour balayer le document dans la transaction.

6. Appareil de l'une quelconque des revendications précédentes, dans lequel l'appareil est configuré pour fonctionner comme un dispositif notarial de chaîne de blocs.

7. Appareil (600) comprenant au moins un noyau de traitement, au moins une mémoire (604) comportant un code de programme informatique, l'au moins une mémoire et le code de programme informatique étant configurés pour, avec l'au moins un noyau de traitement, amener l'appareil à au moins :

  - détecter (310) un identifiant de certification d'un document imprimé comprenant une signature générée par ordinateur pour une vérification d'authenticité,
  - rechercher (320) un enregistrement de grand livre distribué associé à l'identifiant de certification, et
  - vérifier (330) l'authenticité de la signature numérique du document sur la base d'un enregistrement de grand livre distribué associé à l'identifiant de certification, l'enregistrement de grand livre distribué comprenant un hachage d'au moins une partie du document et des réglages pour reproduire un hachage sur la base d'au moins une partie du document, dans lequel l'appareil est amené à commander le balayage du document imprimé sur la base des réglages dans l'enregistrement de grand livre distribué associé à l'identifiant de certification, à calculer une valeur de hachage du document balayé, et à vérifier la signature numérique du document sur la base d'une comparaison de la valeur de hachage calculée et de la valeur de hachage dans l'enregistrement de grand livre distribué.

8. Appareil selon la revendication 7, dans lequel l'enregistrement de grand livre distribué comprend des métadonnées, et l'appareil est amené à vérifier la signature numérique sur la base des métadonnées.

9. Appareil selon la revendication 7, dans lequel l'appareil est amené à calculer le hachage sur la base d'une partie du document balayé sur la base d'informations de la partie hachée du document dans l'enregistrement de grand livre distribué.

10. Appareil de l'une quelconque des revendications précédentes, dans lequel les réglages pour reproduire un hachage du document comprennent au moins des informations parmi des informations de paramètre de contraste, des informations de la partie hachée du document, et des informations du procédé de hachage.

11. Procédé, comprenant :

  - la réception (200), par un dispositif de certification, d'un document pour une certification numérique,
  - la génération (210) d'un identifiant de certification pour le document,
  - la génération (220) d'un hachage d'au moins une partie du document, **caractérisé par**
  - l'ajout (230) d'une signature et de l'identifiant de certification au document après la génération (220) du hachage,
  - la génération (240) d'une transaction signée comprenant l'identifiant de certification, le hachage du document et des réglages pour reproduire un hachage du document, la transaction étant signée par une clé cryptographique associée à l'appareil, et
  - la fourniture (250) de la transaction signée à un grand livre distribué pour vérifier l'authenticité d'une signature d'un document imprimé comprenant l'identifiant de certification, et
  - la provocation de l'initiation d'une impression du document comprenant l'identifiant de certification et la signature.

12. Procédé de vérification d'authenticité, **caractérisé en ce qu'**il comprend :

  - la détection (330) d'un identifiant de certification d'un document imprimé comprenant une signature générée par ordinateur pour une vérification d'authenticité,
  - la recherche (320) d'un enregistrement de grand livre distribué associé à l'identifiant de certification, et
  - la vérification (330) de l'authenticité de la signature numérique sur la base d'un enregistrement de grand livre distribué associé à l'identifiant de certification, l'enregistrement de grand livre distribué comprenant un hachage d'au moins une partie du document et des réglages pour reproduire un hachage sur la base d'au moins une partie du document, dans lequel le balayage du document imprimé est commandé sur la base des réglages dans l'enregistrement de grand livre distribué associé à l'identifiant de certification, une valeur de hachage du document balayé est calculée, et la signature numérique du document est vérifiée sur la base d'une comparaison de la valeur de hachage calculée et de la valeur de hachage dans l'enregistrement de grand livre distribué.

13. Programme informatique configuré, lorsqu'il est exécuté dans un ordinateur, pour provoquer la réalisation d'un procédé selon la revendication 11 ou 12.

Fig. 1

| HASH #n-1 | 402 |
| Certification id | |
| Document hash | 404 |
| Settings | |
| Metadata | |
| | 406 |

400

Fig. 4

```
┌─────────────────────────────────┐
│    Receive document for digital │ ──── 200
│           certification         │
└─────────────────────────────────┘
                 │
                 ▼
┌─────────────────────────────────┐
│  Generate certification identifier for │ ──── 210
│           document              │
└─────────────────────────────────┘
                 │
                 ▼
┌─────────────────────────────────┐
│   Generate hash of at least part of │ ──── 220
│           document              │
└─────────────────────────────────┘
                 │
                 ▼
┌─────────────────────────────────┐
│  Add digital signature and certification │ ──── 230
│       identifier to document    │
└─────────────────────────────────┘
                 │
                 ▼
┌─────────────────────────────────┐
│      Generate signed transaction │
│ comprising certification identifier, hash │ ──── 240
│   of document, and settings to  │
│         regenerate hash         │
└─────────────────────────────────┘
                 │
                 ▼           ──── 250
┌─────────────────────────────────┐
│    Provide signed transaction to │
│        distributed ledger       │
└─────────────────────────────────┘
```

Fig. 2

Detect certification identifier of document printed document comprising computer-generated signature for authenticity verification — 310

Search for distributed ledger record associated with certification identifier — 320

Verify authenticity of digital signature on the basis of distributed ledger record associated with certification identifier, distributed ledger record comprising hash of at least part of document and settings for reproducing hash on the basis of at least part of the document — 330

Fig. 3

Lorem ipsum dolor sit amet,
consectetur adipiscing elit,
sed do eiusmod tempor
incididunt ut labore et dolore
magna aliqua. Ut enim ad
minim veniam, quis nostrud
exercitation ullamco laboris
nisi ut aliquip ex ea
commodo consequat. Duis
aute irure dolor in
reprehenderit in voluptate
velit esse cillum dolore eu
fugiat nulla pariatur.
Excepteur sint occaecat

504

502

500

Fig. 5

606

608

600

612

602

610

604

614

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017048216 A